# EUROPEAN PATENT APPLICATION

(11) **EP 4 550 638 A1**
(43) Date of publication of application: **07.05.2025**
(21) Application number: 23849786.1
(22) Date of filing: 23.06.2023
(51) Int. Cl.: H02K 7/14, B06B 1/12, G09B 9/04

(54) **EXTENSIBLE DEVICE AND TESTING APPARATUS COMPRISING SAME**

(30) Priority: 04.08.2022 JP 2022124888
(71) Applicant: Saginomiya Seisakusho, Inc., Tokyo 165-0033 (JP)
(72) Inventor: IN, Eisei, Sayama-shi, Saitama 350-1395 (JP); UCHIDA, Tomonori, Sayama-shi, Saitama 350-1395 (JP); HOSAKA, Tomohiro, Sayama-shi, Saitama 350-1395 (JP)
(74) Representative: Bandpay & Greuter
(86) International application number: PCT/JP2023/023315
(87) International publication number: WO 2024/029226

(57) **Abstract**

Provided is a test apparatus that is able to be compactly installed and mounts telescopic devices that effectively extend and contract distances of separation between universal fittings. A vibration apparatus that performs vibration by each actuator (10) between cross shaft joints (11, 13) coupled to a base (101) and a support stand (103) causing a nut (41) to rotate, causing a ball screw shaft (17) to slide forward and backward, and thereby extending and contracting includes a rectangular plate (20) that oscillates around X shafts (21) and Y shafts (23) between the base side and the actuator side, and a space (25) that accommodates one end portion of the ball screw shaft without constraining movement thereof is opened inside the rectangular plate.

## Description

### [Technical Field]

The present invention relates to a telescopic device that realizes necessary extension and contraction with a compact structure, and a test apparatus equipped with the same.

### [Background Art]

As a test apparatus that utilizes a plurality of sets of telescopic devices that adjust a distance of separation between universal fittings provided on both end sides with a drive force from a drive source, a driving simulator described in Patent Literature 1, for example, is known.

The driving simulator is adapted to utilize six sets of telescopic devices to realize six levels of freedom of causing a top-side support stand supporting a vehicle cockpit to tilt in XYZ directions, a pitch direction, a roll direction, and a yaw direction with respect to a stand (base).

### [Citation List]

### [Patent Literature]

[Patent Literature 1]
Japanese Patent Laid-Open No. 2015-33671

### [Summary of Invention]

### [Technical Problem]

However, for effective operation of the support stand side of such a telescopic device with respect to the stand side, it is necessary to reduce areas on the support stand side and the stand side and to reduce the total height in order to respond to needs of space saving and an improvement in operability while securing an extension and contraction distance.

Therefore, an object of the present invention is to provide a telescopic device that effectively extends and contracts a distance of separation between universal fittings and a test apparatus that can be compactly installed.

### [Solution to Problem]

An aspect of the invention of a telescopic device to solve the above problem is a telescopic device that is installed to be interposed between a first coupled member and a second coupled member and extends and contracts in a direction of separation between the first coupled member and the second coupled member to adjust a distance of the separation, the telescopic device including: a first universal fitting coupled to the first coupled member; a second universal fitting coupled to the second coupled member; a device base portion coupled to the first universal fitting and supporting the first coupled member such that a posture with respect to the first coupled member is freely changeable; a slide member extended in the direction of the separation between the first coupled member and the second coupled member and held by the device base portion such that the slide member is freely slidable in a longitudinal direction, with an end portion on a side opposite to the device base portion being coupled to the second universal fitting such that a posture with respect to the second coupled member is freely changeable; and a slide mechanism configured to receive a drive force to slide the slide member in the longitudinal direction from a drive source and cause the slide member to slide in the longitudinal direction, in which one of the first universal fitting and the second universal fitting, or both, includes an oscillating member having two sets of rotation shafts in a direction perpendicularly intersecting a sliding direction of the slide member and configured to oscillate around the rotation shafts, a first shaft support member rotatably supporting a first rotation shaft of the oscillating member and fixed to the first coupled member or the second coupled member, and a second shaft support member rotatably supporting a second rotation shaft of the oscillating member and fixed to the device base portion or fixed to an end portion of the slide member on a side opposite to the device base portion, and the oscillating member is formed such that a space accommodating the end portion of the slide member is opened in an extension direction of the slide member so as not to constrain sliding and oscillating movement of the slide member.

According to an aspect of the invention of a test apparatus to solve the above problem is a test apparatus in which at least three or more sets of the telescopic devices described above are installed, the test apparatus including: a substrate member of the first coupled member; and a top plate member of the second coupled member, in which a posture of the top plate member with respect to the substrate member is changed by changing, for each of the telescopic devices, a distance of separation between the substrate member and the top plate member.

### [Advantageous Effects of Invention]

As described above, according to an aspect of the present invention, it is possible to cause the slide member to slide until the end portion side is accommodated in the opening space of the oscillating member of the universal fitting so that the distance of separation between the free fittings can be reduced by the amount corresponding to the sliding movement into the opening space as compared with the related art in which the size of the universal fittings are added to the length of the slide member, and to secure the distance of separation between the universal fittings similarly to the related art by causing the end portion of the slide member to come off from the inside of the opening space of the oscillating member and slide.

Therefore, it is possible to achieve extension while effectively reducing a distance of separation between universal fittings of the telescopic device and to compactly install a test apparatus utilizing the telescopic device.

### [Brief Description of Drawings]

[Figure 1] Figure 1 is a perspective view illustrating an appearance of a vibration apparatus that is an example of a test apparatus with a telescopic device mounted thereon according to an embodiment of the present invention.
[Figure 2] Figure 2 is a front view illustrating the vibration apparatus.
[Figure 3] Figure 3 is a partial longitudinal sectional view that is parallel to a direction of alignment with a drive source and illustrates the telescopic device.
[Figure 4] Figure 4 is a diagram illustrating the telescopic device, where (a) is a partial longitudinal sectional view parallel to a direction perpendicularly intersecting Figure 3, and (b) is a IVb-IVb sectional view of a universal fitting of the telescopic device in (a).
[Figure 5] Figure 5 is a perspective view illustrating an oscillating member of the universal fitting of the telescopic device.
[Figure 6] Figure 6 is a diagram illustrating the universal fitting of the telescopic device in a non-oscillating state, where (a) is a partial longitudinal sectional view parallel to one direction, and (b) is a partial longitudinal sectional view parallel to a direction perpendicularly intersecting (a).
[Figure 7] Figure 7 is a diagram illustrating the universal fitting of the telescopic device in an oscillating state, where (a) is a partial longitudinal sectional view parallel to one direction, and (b) is a partial longitudinal sectional view parallel to a direction perpendicularly intersecting (a).
[Figure 8] Figure 8 is a diagram for explaining operations and effects of the vibration apparatus, where (a) is a plan model view, and (b) is a front model view.
[Figure 9] Figure 9 is a diagram illustrating a vibration apparatus in the related art to be compared with the vibration apparatus, where (a) is a plan model view, and (b) is a front model view.
[Figure 10] Figure 10 is a comparative front model view with a plurality of aligned vibration apparatuses in the related art in an operating state for the purpose of showing operations and effects of the vibration apparatuses.
[Figure 11] Figure 11 is a partial longitudinal sectional view illustrating the vibration apparatus in the related art.

### [Description of Embodiments]

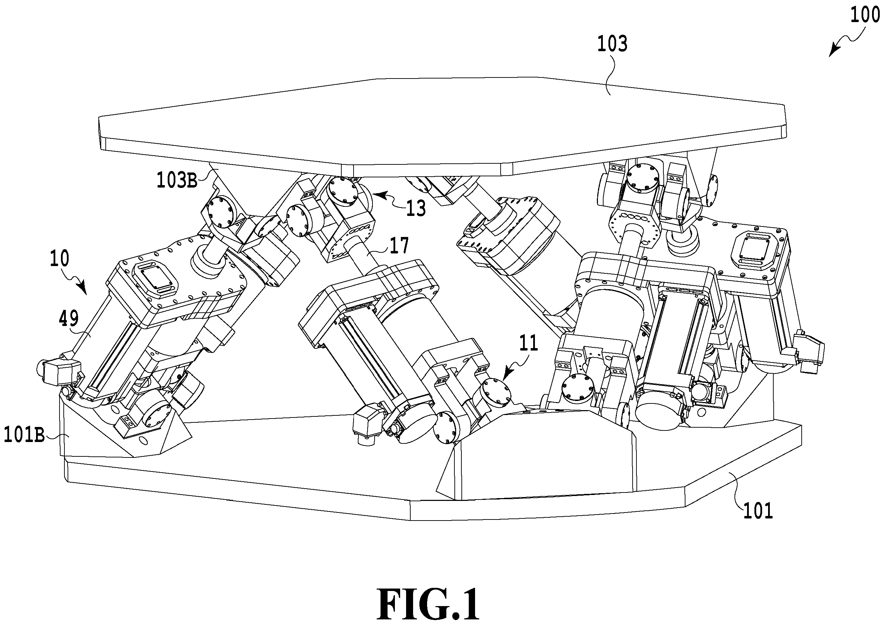

Hereinafter, an embodiment of the present invention will be described in detail with reference to the drawings. Figures 1 to 11 are diagrams for explaining a vibration apparatus that is an example of a test apparatus with a telescopic device mounted thereon according to the embodiment of the present invention.

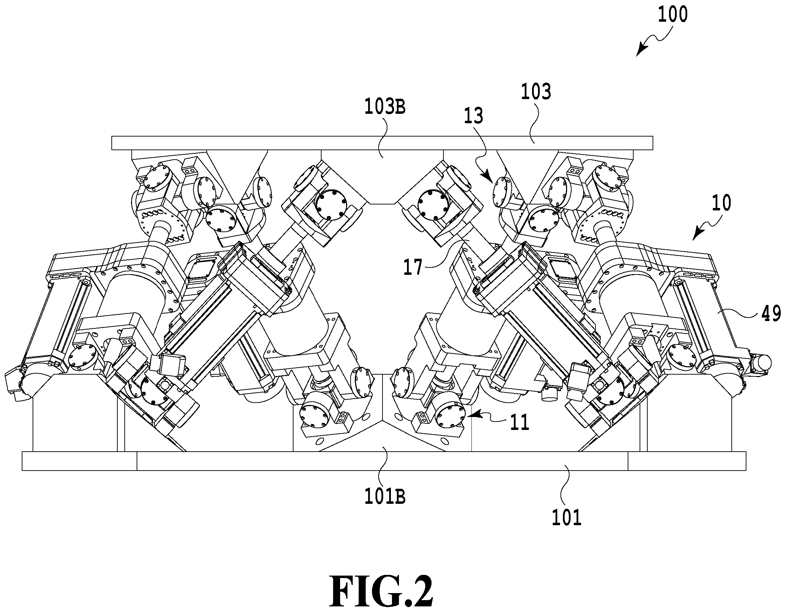

In Figures 1 and 2, a vibration apparatus (test apparatus) 100 is configured to function as a hexapod that constitutes a part of a driving simulator and is configured such that six sets of actuators (telescopic devices) 10 are interposed between and individually support a base (substrate member, stand, first coupled member) 101 installed in a test room or the like and a support stand (top plate member, second coupled member) 103 that fixes a cockpit of the driving simulator above the support stand. The vibration apparatus 100 is adapted to realize movement of six levels of freedom such as tilting the support stand 103 in XYZ directions, a pitch direction, a roll direction, and a yaw direction with respect to the base 101 by each of the six sets of actuators 10 performing extension and contraction operations in accordance with control signals from a host computer (not illustrated) of the driving simulator and thereby adjusting distances of separation between installation locations. Here, although the vibration apparatus 100 including the six sets of actuators 10 will be described as an example in the present embodiment, the present invention is not limited thereto, and it is needless to say that the support stand can be supported in a displaceable manner with respect to the base by including three or more sets of actuators 10, for example.

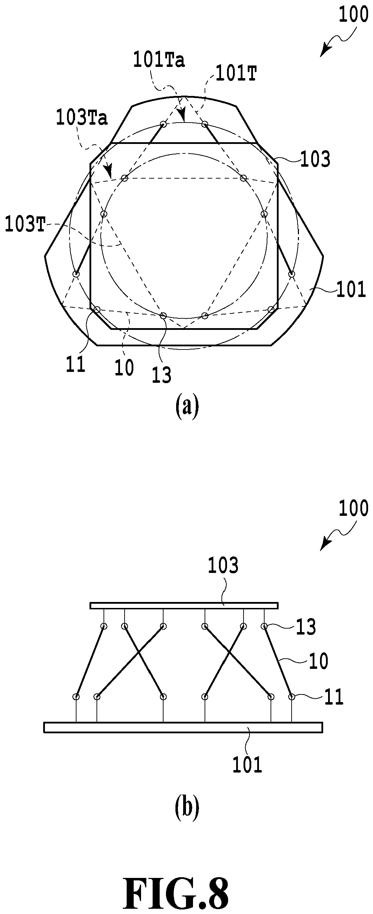

The vibration apparatus 100 is produced to have a structure in which both end portions 10e of two sets of actuators 10 are coupled to and support support blocks 101B and 103B near vertices 101Ta and 103Ta (see Figure 8) of triangles 101T and 103T that face each other with substantially the centers of the base 101 and the support stand 103 located in common. The vibration apparatus 100 is produced to have a positional relationship in which the triangle 103T of the support stand 103 is rotated by 60° (see Figure 8) with respect to the triangle 101T of the base 101, both end portions 10e of every two sets of actuators 10 are installed on the support blocks 101B and 103B so as to be interposed between portions near the vertices 101Ta and 103Ta adjacent in forward/backward rotation directions from portions near vertexes 101Ta and 103Ta, each of which is one of vertices of the triangle, and each of the six sets of actuators 10 is disposed between the base 101 and the support stand 103. In this manner, the vibration apparatus 100 can support the support stand 103 to be supported with respect to the base 101 while changing the support stand 103 into a desired posture and a stable state, vibrating the support stand 103, and the like by adjusting each of the distances of separation between both end portions 10e of the six sets of actuators 10.

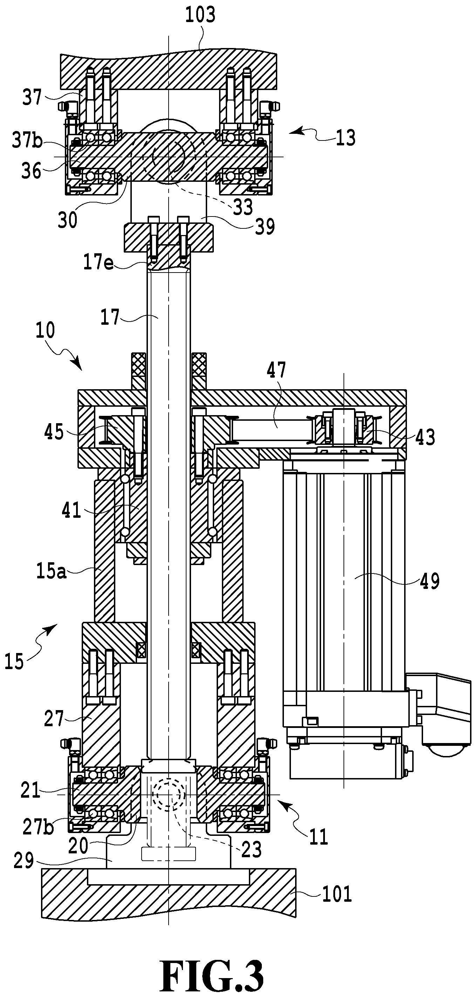

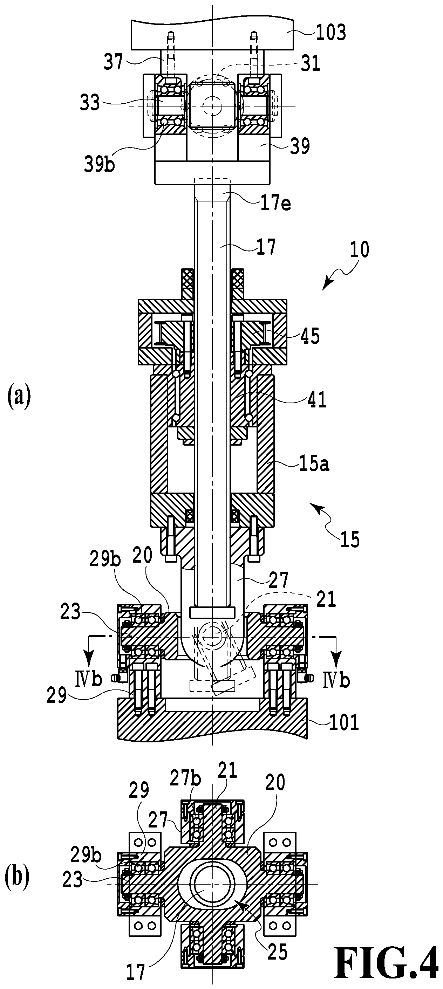

Also, each actuator 10 is adapted such that a cross shaft joint (first universal fitting) 11 is installed on the support block 101B of the base 101 and a device base portion 15 is supported such that the posture thereof with respect to the base 101 is freely changeable while a cross shaft joint (second universal fitting) 13 is installed on the support block 103B of the support stand 103 and an upper end portion 17e of a ball screw shaft (slide member) 17 held by the device base portion 15 in a slidable manner in the longitudinal direction is supported such that the posture thereof with respect to the support stand 103 is freely changeable, as illustrated in Figures 3 and 4. In other words, the actuator 10 supports the support stand 103 such that the posture of the support stand 103 with respect to the base 101 is freely changeable.

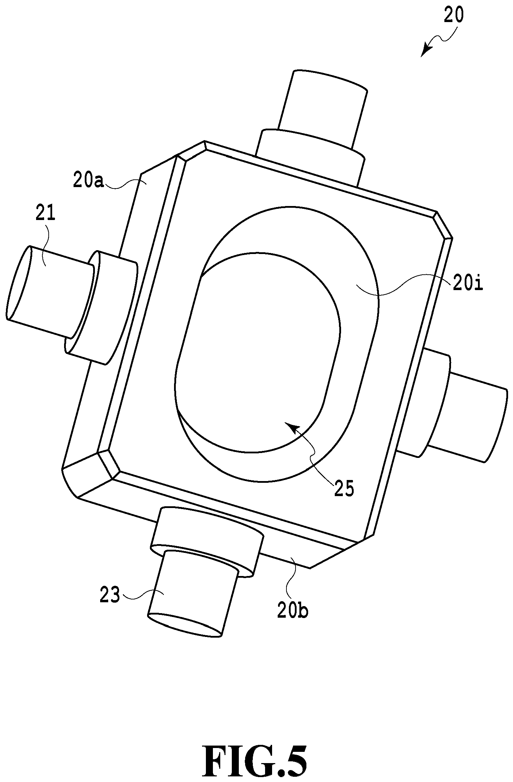

The cross shaft joint 11 on the side of the base 101 is produced into a shape in which a pair of X shafts 21 project from centers of both parallel side surfaces 20a out of pairs of parallel side surfaces of the rectangular plate 20 and a pair of Y shafts 23 project from centers of both parallel side surfaces 20b of the other pair of parallel side surfaces of the rectangular plate 20 as illustrated in Figure 5, the pair of X shafts 21 are rotatably and axially supported by bearings 27b in a pair of shaft bearings (second shaft support members) 27 provided to stand on an upper surface of the base 101 such that the shaft bearings 27 are spaced apart from each other in the X shaft direction in the drawings, and the pair of Y shafts 23 are rotatably and axially supported by bearings 29b in a pair of shaft bearings (first shaft support members) 29 provided to stand on a lower surface of the device base portion 15 such that the shaft bearings 29 are spaced apart from each other in a Y shaft direction in the drawing.

In this manner, the vibration apparatus 100 can support the actuator 10 such that the posture of the device base portion 15 is freely changeable with the rectangular plate 20 functioning as an oscillating member with respect to the base 101 by each of the shaft bearings 27 and 29 of the base 101 and the device base portion 15 rotatably holding the X shafts 21 and the Y shafts 23 of the cross shaft joint 11 (rectangular plate 20).

Similarly to the cross shaft joint 11, the cross shaft joint 13 on the side of the support stand 103 is adapted such that a pair of X shafts 31 of a cross member 30 are rotatably and axially supported by bearings 37b in a pair of shaft bearings 37 provided to stand on a lower surface of the support stand 103 such that the shaft bearings 37 are spaced apart from each other in the X shaft direction and a pair of Y shafts 33 of the cross member 30 are rotatably and axially supported by bearings 39b in a pair of shaft bearings 39 provided to stand on the upper end portion 17e of the ball screw shaft 17 such that the shaft bearings 39 are spaced apart from each other in the Y shaft direction.

In this manner, the vibration apparatus 100 can support the actuator 10 such that the posture of the ball screw shaft 17 thereof is freely changeable, in other words, such that the posture of the support stand 103 is freely changeable with respect to the ball screw shaft 17 of the actuator 10 with the cross member 30 oscillating with respect to the support stand 103 by each of the shaft bearings 37 and 39 of the support stand 103 and the ball screw shaft 17 rotatably holding the X shafts 31 and the Y shafts 33 of the cross shaft joint 13 (cross member 30).

Here, although a case where the rectangular plate 20 is disposed only on the cross shaft joint 11 on the side of the base 101 of the actuator 10 will be described as an example of the vibration apparatus 100 in the present embodiment, the present invention is not limited thereto, and it is needless to say that the rectangular plate 20 may be disposed on the cross shaft joint 13 on the side of the support stand 103 instead or the rectangular plates 20 may be disposed on both of them.

The device base portion 15 includes a housing member 15a that relatively rotatably holds a nut (ball case) 41, which constitutes a rotary ball screw 40 (manufactured by THK Co., Ltd. for example) along with the ball screw shaft 17 on a side of one end portion, and the shaft bearings 29 that rotatably hold the Y shafts 23 of the cross shaft joint 11 on the side of the base 101 are formed at the other end portion of the housing member 15a on the opposite side in a manner projecting on the side of the base 101.

The rotary ball screw 40 is configured such that a nut 41 is rotatably held by the housing member 15a of the device base portion 15 on the side of the base 101, and on side of the support stand 103, the shaft bearings 37 that rotatably hold the Y shafts 33 of the cross member 30 are formed in a protruding manner on the upper end portion 17e on the side of the support stand 103, and the ball screw shaft 17 is slidably held inside the nut 41.

Although not illustrated, the rotary ball screw 40 has a helical screw groove (helical groove) shape formed on an outer circumferential surface of the ball screw shaft (spiral groove structure shaft) 17 and an inner circumferential surface of the nut 41 that accommodate multiple balls (ball group) such that the balls can roll, balls accommodated in the helical groove is pushed out in one direction by one of the ball screw shaft 17 and the nut 41 rotating relative to the other, and the other one of the ball screw shaft 17 and the nut 41 slides in the opposite direction.

In addition, the actuator 10 is provided with a servo motor (drive source) 49 such that the nut 41 (ball screw shaft 17) of the rotary ball screw 40, which is rotatably held by the device base portion 15 on the side of the base 101, and a drive rotation shaft are in parallel postures, and the device base portion 15 functions as a drive force conversion mechanism by including a pulley 43 fixed such that the pulley 43 integrally rotates coaxially with the drive rotation shaft of the servo motor 49, a pulley 45 fixed such that the pulley 45 integrally rotates coaxially with the nut 41, and a belt 47 that is wound around the pair of pulleys 43 and 45 and transmits a drive rotation force of the servo motor 49 to the nut 41.

In this manner, the actuator 10 can slide the ball screw shaft 17 in forward and backward directions by driving and controlling the servo motor 49 to rotate the nut 41 of the rotary ball screw 40 forward and backward, cause the ball screw shaft 17 to advance and retreat toward the side of the support stand 103 with respect to the device base portion 15 (nut 41) on the side of the base 101, and can thereby extend and contract the entire length.

At this time, the actuator 10 is adapted such that the cross shaft joints 11 and 13 on both end sides support the base 101 and the device base portion 15 (the nut 41 of the rotary ball screw 40) and the support stand 103 and the upper end portion 17e of the ball screw shaft 17 of the rotary ball screw 40 such that relative postures thereof are freely changeable in response to extension and contraction of the entire length, and the actuator 10 can thereby function as the vibration apparatus 100 and realize operations of inclination and vibration at six levels of freedom.

Here, although a case where the rotary ball screw 40 is mounted and a slide mechanism that causes the ball screw shaft 17 to slide in the axis direction without causing the ball screw shaft 17 to rotate in the longitudinal direction is mounted will be described as an example of the vibration apparatus 100 according to the present embodiment, the present invention is not limited thereto, and for example, it is also possible to change the ball screw shaft 17 to a male screw shaft (helical groove structure shaft) with a male screw (helical groove shape) formed on an outer circumferential surface and to employ a slide mechanism that causes the male screw shaft to rotate forward and backward and slide in an advancing/retreating direction by rotatably holding a female screw nut with a female screw (helical groove shape) screwed onto the male screw formed on an inner circumferential surface.

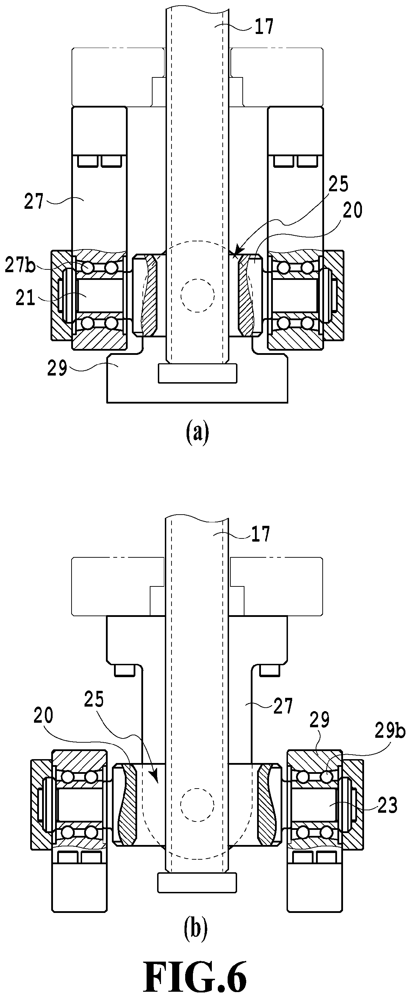

Also, the actuator 10 has a large opening accommodating space 25 formed to have an inner circumferential surface 20i that is substantially parallel to the inside of the parallel side surfaces 20a and 20b of the rectangular plate 20 as illustrated in Figure 5, and the rectangular plate 20 allows advancement of an end portion of the ball screw shaft 17, which slides in an up and down direction in accordance with relative rotation of the nut 41 of the rotary ball screw 40, on the side of the base 101 into the accommodating space 25 without constraining the movement of the end portion as illustrated in Figure 6.

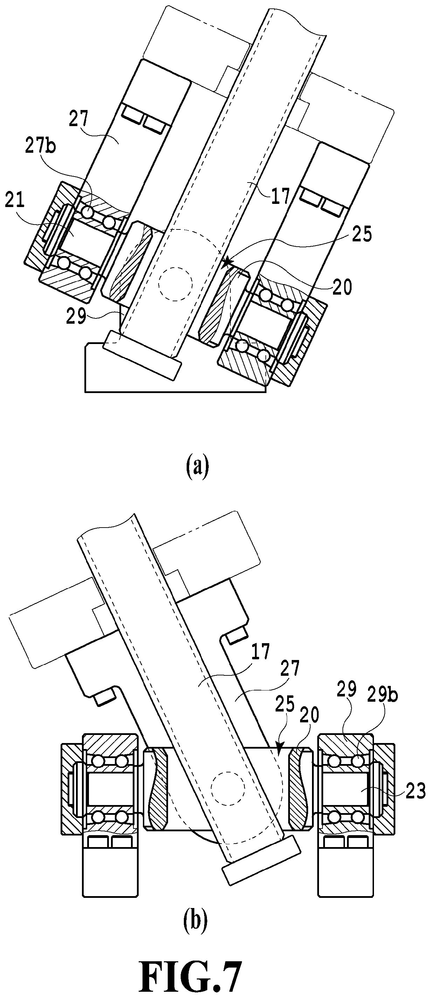

In particular, since the rectangular plate 20 rotates forward and backward around the Y shafts 23 rotatably supported by the shaft bearings 29 on the side of the base 101 integrally with the shaft bearings 27 of the device base portion 15 rotatably supporting the pair of X shafts 21 as illustrated in Figure 7(a), there is no need to secure a wide space in the inner circumferential surface 20i of the accommodating space 25 between the pair of X shafts 21, and the ball screw shaft 17 does not come into contact with the inner circumferential surface 20i of the accommodating space 25 as it is.

In addition, since the rectangular plate 20 is adapted such that the pair of Y shafts 23 is rotatably supported by the shaft bearings 29 installed on the side of the base 101 as illustrated in Figure 7(b), and the end portion of the ball screw shaft 17 on the side of the base 101 oscillates in the accommodating space 25 integrally with the bearings 27 of the device base portion 15, it is necessary to secure a wide space in the inner circumferential surface 20i of the accommodating space 25 between the pair of Y shafts 23 by the amount corresponding to the oscillation. In short, the rectangular plate 20 is produced such that the end portion of the ball screw shaft 17, which oscillates integrally with the shaft bearings 27 of the device base portion 15, on the side of the base 101 does not come into contact with the inner circumferential surface 20i of the accommodating space 25 without the movement of the end portion being constrained. In other words, the cross shaft joint 13 on the side of the support stand 103 is configured into a so-called general-purpose universal joint using the cross member 30, while the cross shaft joint 11 on the side of the base 101 is configured as a hollow cross shaft joint using the rectangular plate 20 having the accommodating space 25 formed therein and having the X shafts 21 and the Y shafts 23, and is produced such that the end portion of the ball screw shaft 17 of the rotary ball screw 40 on the side of the base 101 can be accommodated in the accommodating space 25 on the inner side opening in the extension direction of the ball screw shaft 17 in a manner in which the end portion is able to freely oscillate.

In this manner, the actuator 10 is adapted such that the cross shaft joint 11 is coupled to and supports the support stand 103 as illustrated in Figure 8 and the cross shaft joint 13 coupled to the base 101 can allow movement (advancement) of the end portion of the ball screw shaft 17 of the rotary ball screw 40 on the side of the base 101 to the inside of the accommodating space 25 of the rectangular plate 20.

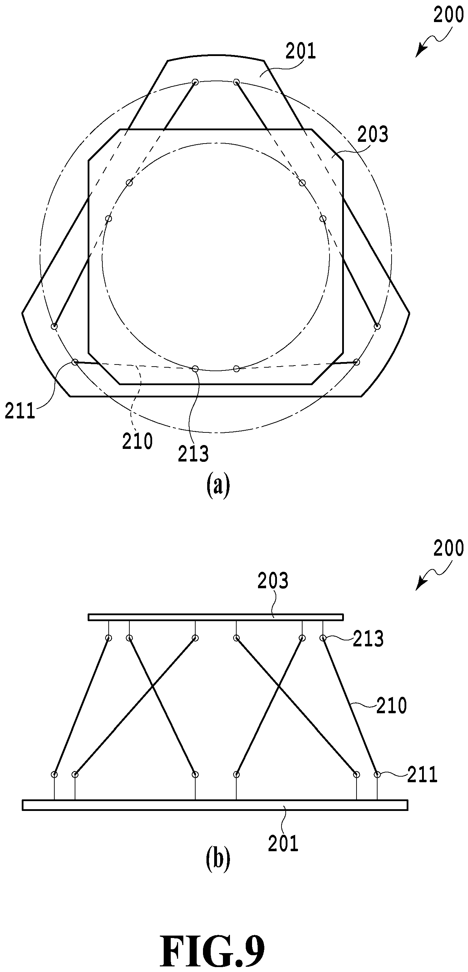

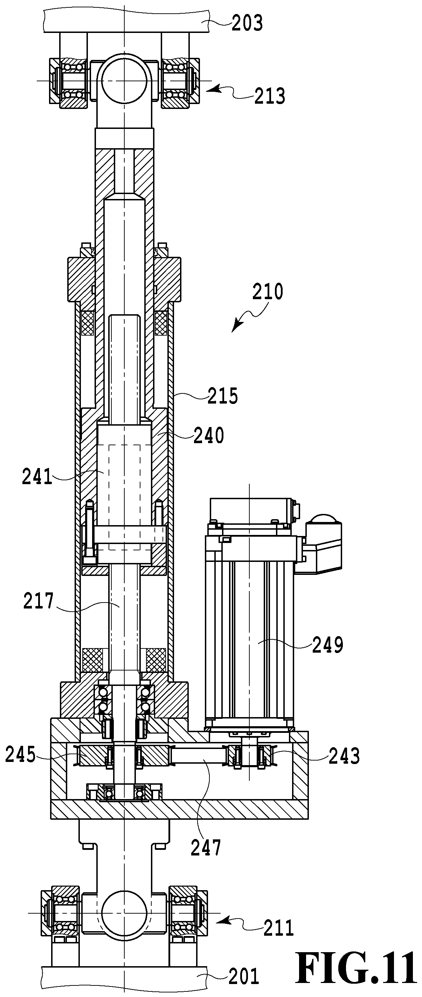

Therefore, the vibration apparatus 100 can have a more compact structure than a vibration apparatus 200 (see Figure 9) in which actuators 210 in the related art illustrated in Figure 11 is interposed and support a support stand 203 such that a posture with respect to the base 201 is freely changeable, and it is also possible to reduce the areas of the base 101 and the support stand 103 of the vibration apparatus 100 as compared with the base 201 and the support stand 203 of the vibration apparatus 200 and thereby to reduce the necessary installation space to a compact space.

Here, each actuator 210 in the related art will be briefly described. As illustrated in Figure 11, the actuator 210 is adapted such that cross shaft joints 211 and 213 produced to have a structure similar to that of the cross shaft joint 11 according to the present embodiment are coupled and supports the base 201 and the support stand 203 such that the posture of the support stand 203 is freely changeable with respect to the base 201. The actuator 210 is adapted to change the distance of separation between the cross shaft joints 211 and 213 by a rotary ball screw 240 rotating and moving upward and downward a ball screw shaft 217 rotatably and axially supported by a nut 241 fixed to a base portion main body 215 with a rotation drive force of a servo motor 249 transmitted via pulleys 243 and 245 and a belt 247, and to change the posture of the support stand 203 with respect to the base 201.

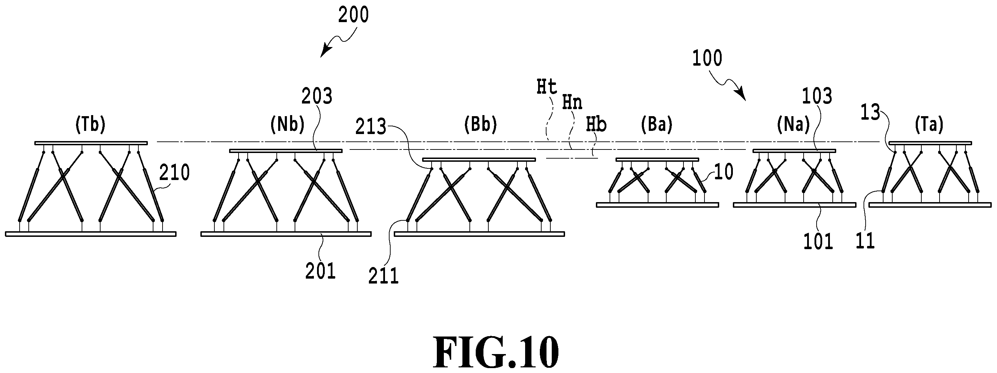

Therefore, when the vibration apparatuses function as hexapods constituting parts of driving simulators, for example, and in a case of a test condition that a support surface supporting a test target is caused to vibrate, for example, between a height Hb at a low level (Ba, Bb) to a height Ht at a high level (Ta, Tb) around a height Hn in a stationary state (Na, Nb) at the center as illustrated in Figure 10, it is necessary to secure a large installation areas for the base 201 and the support stand 203 and also to secure a space in the height direction for the vibration apparatus 200 in the related art, while it is possible to reduce the installation areas for the base 101 and the support stand 103 and also to reduce a space in the height direction into a compact space for the vibration apparatus 100 according to the present embodiment.

In this manner, according to the vibration apparatus 100 with the actuators 10 of the present embodiment mounted thereon, it is possible to cause the end portion of the ball screw shaft 17 of the rotary ball screw 40 on the side of the base 101 to move to the inside of the accommodating space 25 of the rectangular plate 20 of the cross shaft joint 11, and to achieve a compact installation location even with a compact structure even in a case where the function similar to that of the actuators 200 in the related art is included.

The scope of the present invention is not limited to the exemplary embodiments illustrated and described and also includes all embodiments that produce effects equivalent to those intended by the present invention. Furthermore, the scope of the present invention is not limited to combinations of features of the inventions specified by each claim and can be defined by any desired combinations of all the disclosed specific features.

### [Reference Signs List]

10 Actuator (telescopic device)
11 Cross shaft joint (first universal fitting)
13 Cross shaft joint (second universal fitting)
15 Device base portion
15a Housing member
17 Ball screw shaft (slide member)
20 Rectangular plate (oscillating member)
20i Inner circumferential surface
21 X shaft
23 Y shaft
25 Accommodating space
27, 29 Shaft bearing
30 Cross member
41 Nut
43, 45 Pulley
47 Belt
49 Servo motor
100 Vibration apparatus
101 Base (substrate member, stand, first coupled member)
103 Support stand (top plate member, second coupled member)

## Claims

1. A telescopic device that is installed to be interposed between a first coupled member and a second coupled member and extends and contracts in a direction of separation between the first coupled member and the second coupled member to adjust a distance of the separation, the telescopic device comprising:
a first universal fitting coupled to the first coupled member;
a second universal fitting coupled to the second coupled member;
a device base portion coupled to the first universal fitting and supporting the first coupled member such that a posture with respect to the first coupled member is freely changeable;
a slide member extended in the direction of the separation between the first coupled member and the second coupled member and held by the device base portion such that the slide member is freely slidable in a longitudinal direction, with an end portion on a side opposite to the device base portion being coupled to the second universal fitting such that a posture with respect to the second coupled member is freely changeable; and
a slide mechanism configured to receive a drive force to slide the slide member in the longitudinal direction from a drive source and cause the slide member to slide in the longitudinal direction,
wherein
one of the first universal fitting and the second universal fitting, or both, includes
an oscillating member having two sets of rotation shafts in a direction perpendicularly intersecting a sliding direction of the slide member and configured to oscillate around the rotation shafts,
a first shaft support member rotatably supporting a first rotation shaft of the oscillating member and fixed to the first coupled member or the second coupled member, and
a second shaft support member rotatably supporting a second rotation shaft of the oscillating member and fixed to the device base portion or fixed to an end portion of the slide member on a side opposite to the device base portion,
and
the oscillating member is formed such that a space accommodating the end portion of the slide member is opened in an extension direction of the slide member so as not to constrain sliding and oscillating movement of the slide member.

2. The telescopic device according to claim 1,
wherein the slide member is formed into a helical groove structure shaft with a helical groove formed on a side of an outer circumferential surface of a circular section, and
the slide mechanism is configured to use a helical groove shape of the helical groove structure shaft to convert a rotation drive force received from the drive source into a linear drive force and cause the helical groove structure shaft to slide in an axis direction.

3. The telescopic device according to claim 2, wherein the slide mechanism includes a ball group accommodated in the helical groove shape of the helical groove structure shaft such that the ball group is able to freely roll, a ball case with a helical groove shape formed on a side of an inner circumferential surface facing the outer circumferential surface of the helical groove structure shaft to accommodate the ball group inside the helical groove shape such that the ball group is able to freely roll, the ball case maintaining the accommodated state of the ball group, and a drive force conversion mechanism configured to receive a rotation drive force from the drive source and cause the ball case to rotate while positioning the ball case in the axis direction of the helical groove structure shaft and rotatably holding the ball case around an outer circumference of the helical groove structure shaft.

4. The telescopic device according to claim 3,
wherein a motor that causes a rotation shaft to rotate is disposed as the power source at a position adjacent to the helical groove structure shaft, and
the drive force conversion mechanism includes a drive force conversion mechanism that transmits a rotation drive force of the motor to the ball case by winding a belt around a pair of pulleys installed to rotate coaxially with each of the rotation shafts of the ball case and the motor.

5. A test apparatus in which at least three or more sets of the telescopic devices according to any one of claims 1 to 4 are installed, the test apparatus comprising:
a substrate member of the first coupled member; and a top plate member of the second coupled member,
wherein a posture of the top plate member with respect to the substrate member is changed by changing, for each of the telescopic devices, a distance of separation between the substrate member and the top plate member.
